# EUROPEAN PATENT SPECIFICATION

(11) **EP 3 290 988 B1**
(45) Date of publication and mention of the grant of the patent: **05.02.2020**
(21) Application number: 15890367.4
(22) Date of filing: 30.04.2015
(51) Int. Cl.: G02B 27/01, G02B 27/22, G02B 7/12

(54) **ELECTRONIC APPARATUS AND DISPLAY MODULE THEREOF**
ELEKTRONISCHE VORRICHTUNG UND ANZEIGEMODUL DAFÜR
APPAREIL ÉLECTRONIQUE ET MODULE D'AFFICHAGE ASSOCIÉ

(43) Date of publication of application: 07.03.2018
(73) Proprietor: Shenzhen Royole Technologies Co., Ltd., Shenzhen, Guangdong 518172 (CN)
(72) Inventor: YANG, Songling, Shenzhen Guangdong 518052 (CN); LIU, Zihong, Shenzhen Guangdong 518052 (CN)
(74) Representative: Proi World Intellectual Property GmbH
(86) International application number: PCT/CN2015/078149
(87) International publication number: WO 2016/172987

(56) References cited:
- CN-A- 103 149 690
- CN-A- 103 901 621
- CN-A- 104 570 355
- CN-U- 201 489 193
- CN-U- 201 522 579
- CN-U- 203 786 397
- US-A- 6 084 555
- US-A- 6 144 347
- US-B1- 6 538 624

## Description

### FIELD

The present disclosure relates to an adjustment mechanism, and particularly to an adjustable display component and an electronic device having the display component.

### BACKGROUND

At present, a near-to-eye display device, such as a head mounted display (HMD) and the like, becomes more and more popular. The working principle of the near-to-eye display device is to enlarge an image in a super-micro display screen by means of a group of precise optical lens, and to project the image to eyes, so that a wearer may view an enlarged virtual image, which is similar to an enlarged virtual image presented by viewing an object via a magnifying glass. In order to be suitable for pupillary distances of different wearers, most HMDs in the market at present have an adjustment function of pupillary distance. However, few HMDs have an adjustment function of diopter, which is suitable for a myopic or hyperopic wearer.

US6144347A relates to a head-mounted image display apparatus, including optical visual units and LCD display panels. The LCD display panels move along a shaft relative to the optical visual units. The optical visual units move relative to each other along another shaft different from the shaft.

US6538624B1 relates to a head-mounted image display apparatus, including optical units and image display units. The optical units move relative to each other in the horizontal direction along a rack. The image display units move along a diopter adjustment feed screw in the vertical direction relative to the optical units.

US6084555Arelates to a spectacle type display arrangement, including a pair of lens and mirror units and a pair of LCD holders. The lens and mirror units move relative to each other in the left and right direction along a shaft, while the LCD holders move in the left and right direction along another shaft relative to the lens and mirror units.

CN201522579U relates to an adjustable binocular optical mirror, including two eyepiece seats and a double threaded screw. Two ends of the double threaded screw are respectively provided with a left outer thread and a right outer thread. Inner sides of the two eyepiece seats are respectively provided with inner threads fitted with the two outer threads of the double threaded screw.

### SUMMARY

Embodiments of the present disclosure provide a display component which may adjust a pupillary distance and a diopter, and an electronic device having the display component.

The display component includes: two optical units; a first adjustment mechanism connected to the two optical units and configured to adjust a distance between the two optical units; two image generation devices, each of the two image generation devices movably connecting to one of the two optical units corresponding to the image generation device, and an image generated by each of the two image generation devices being projected by the corresponding optical unit in a predetermined direction; and two second adjustment mechanisms, each of the two second adjustment mechanisms connecting to one of the two image generation devices corresponding to the second adjustment mechanism and configured to adjust a distance between the corresponding image generation device and the optical unit corresponding to the image generation device.

The electronic device includes a housing and the above display component accommodated in the housing, in which at least one part of the first adjustment mechanism and at least one part of the second adjustment mechanisms are exposed out of the housing.

The first adjustment mechanism in the present disclosure may adjust the distance between the optical units, thus realizing an adjustment of the pupillary distance. The second adjustment mechanism may adjust the distance between the image generation device and the optical unit corresponding to the image generation device, thus realizing an adjustment of the diopter. Accordingly, the display component and the electronic device in the present disclosure may adjust both the pupillary distance and the diopter, thus being suitable for more users.

### BRIEF DESCRIPTION OF THE DRAWINGS

The following accompanying drawings are used for illustrating various embodiments of the present disclosure in detail in combination with specific embodiments. It should be understood that various elements illustrated in the accompanying drawings do not represent actual sizes and scale relations, and the accompanying drawings are only schematic views intended for clear illustration. Thus, the accompanying drawings should not be construed to limit the present disclosure.
Fig. 1 is a schematic view of a wearable electronic device provided in an embodiment of the present disclosure.
Fig. 2 is a schematic view of a display component of the wearable electronic device in Fig. 1.
Fig. 3 is a side schematic view of a second stud and a second crown gear of the display component in Fig. 2.
Fig. 4 is a schematic view of the display component in Fig. 2, in which the display component is in another state.

### DETAILED DESCRIPTION

In order to make the objectives, technical solutions and advantages of the present disclosure more definite and clear, the present disclosure is further illustrated in detail in combination with a plurality of embodiments and accompanying drawings. It should be understood that, the specific embodiments described herein are only used for explaining the present disclosure and not for limiting the present disclosure. It must be noted that, the "connection" between two elements mentioned in the present disclosure does not necessarily refer to a direct connection, it may be an indirect connection achieved through a third element.

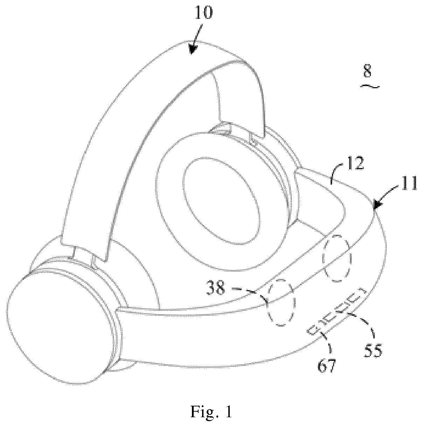

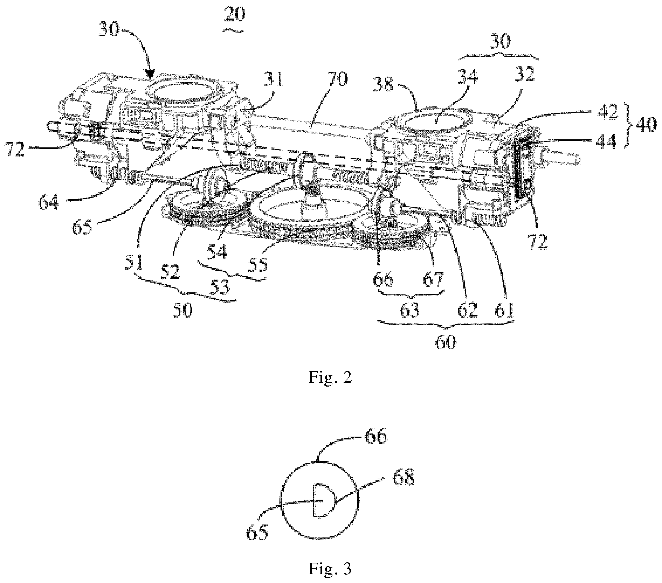

In combination with Fig. 1 and Fig. 2, which are schematic views of a wearable electronic device 8 provided in an embodiment of the present disclosure. The electronic device 8 may be a wearable video player, a wearable game device or a wearable navigation device, and so on. The electronic device 8 includes a headphone 10 and a display assembly 11 rotatably connected to the headphone 10. The display assembly 11 includes a housing 12 and a display component 20 accommodated in the housing 12. Certainly, the display assembly 11 further includes related circuits, batteries and etc., which are not illustrated in the drawings. The display component 20 includes two optical units 30, two image generation devices 40, one first adjustment mechanism 50 and two second adjustment mechanisms 60. At least part of the first adjustment mechanism 50 and at least part of the second adjustment mechanisms 60 are exposed out of the housing 12 so that it is convenient for a user to adjust.

The optical unit 30 includes a lens barrel 32 and a plurality of lens sets 34 disposed in the lens barrel 32. The lens barrel 32 has an entrance port (not illustrated in the drawings) and an exit port 38. The entrance port is located at a side facing the image generation device 40. Light passing through the entrance port enters the lens sets 34 to be refracted and reflected, and is finally emitted out from the exit port 38. The image generation device 40 includes a base 42 and a micro display unit 44 disposed to the base 42. The micro display unit 44 has a micro displayer (not illustrated in the drawings), for example an OLED micro displayer, and is disposed to the entrance port. Accordingly, light of an image displayed in the micro displayer enters the entrance port and is projected by the lens sets 34 in a predetermined direction. An enlarged virtual image of the image displayed in the micro displayer is visible to human eyes when the light emitted out from the exit port 38 enters the human eyes.

The first adjustment mechanism 50 is connected to the two optical units 30 and is configured to adjust a distance between the two optical units 30. Specifically, the first adjustment mechanism 50 includes two first threaded holes 51 formed in the two optical units 30, one first stud 52 screwed to the two first threaded holes 51, and one first rotary assembly 53 connected to the first stud 52. In the embodiment, the first threaded hole 51 is formed at an end of a connecting sheet 31 far away from the lens barrel 32, wherein the connecting sheet 31 is secured to the lens barrel 32. The connecting sheet 31 may have certain elasticity, thus serving to absorb a part of vibration of the first rotary assembly 53 in a rotation process of the first rotary assembly 53. However, it may be understood that, the first threaded hole 51 may be directly formed in the lens barrel 32. Two opposite sides of the first stud 52 are provided with threads which are opposite to each other, so that the two connecting sheets 31 will get close to each other or move away from each other when the first stud 52 rotates.

The first rotary assembly 53 is configured to drive the first stud 52 to rotate in two opposite directions so as to adjust the distance between the two optical units 30. Specifically, in the embodiment, the first rotary assembly 53 includes one first crown gear 54 configured to rotate coaxially and synchronously with the first stud 52 and one first straight gear 55 coupled to the first crown gear 54. The first straight gear 55 partially extends out of the housing 12, i.e. exposed out of the housing 12, so that it is convenient for the user to adjust. Accordingly, by rotating the first straight gear 55, the first stud 52 may be rotated. As an illustrative embodiment, when the first straight gear 55 is rotated in a first rotation direction, the first stud 52 is driven to rotate in a first direction, so that the two optical units 30 are driven to get close to each other. When the first straight gear 55 is rotated in a second rotation direction which is opposite to the first rotation direction, the first stud 52 is driven to rotate in a second direction which is opposite to the first direction, so that the two optical units 30 are driven to move away from each other. Thus, the distance between the two optical units 30 may be adjusted, i.e. a pupillary distance may be adjusted. However, it may be understood that, the first rotary assembly 53 is not limited to the structure illustrated in the drawings. For example, the first rotary assembly 53 may be a paddle (not illustrated in the drawings) fixed to the first stud 52 and extending outwards along a direction perpendicular to the first stud 52, and the above function may be implemented by shifting the paddle. Or, the first rotary assembly 53 may only include the first crown gear 54.

In combination with Fig. 2 and Fig. 3, the second adjustment mechanism 60 is connected to one image generation device 40 corresponding to the second adjustment mechanism 60 and configured to adjust a distance between the corresponding image generation device 40 and the optical unit 30 corresponding to the image generation device 40. Specifically, the second adjustment mechanism 60 includes one second threaded hole 61 formed in the image generation device 40, one second stud 62 screwed to the second threaded hole 61, and one second rotary assembly 63 connected to the second stud 62. In the embodiment, the second threaded hole 61 is formed in the base 42 of the image generation device 40, the second stud 62 defines an axis (not marked in the drawings) and includes a first segment 64 provided with threads and coupled to the second threaded hole 61, and a second segment 65 opposite to the first segment 64. The second segment 65 has a substantially D-shaped section along a direction perpendicular to the axis, and the second rotary assembly 63 sets a D-shaped through hole 68 matched with the section of the second segment in shape. The second segment 65 passes through the through hole 68 and is configured to move in the through hole 68 along a direction of the axis. In the present embodiment, the second rotary assembly 63 specifically includes one second crown gear 66 provided with the through hole 68 and one second straight gear 67 coupled to the second crown gear 66. The second straight gear 67 partially extends out of the housing 12, i.e. exposed out of the housing 12, so that it is convenient for the user to adjust.

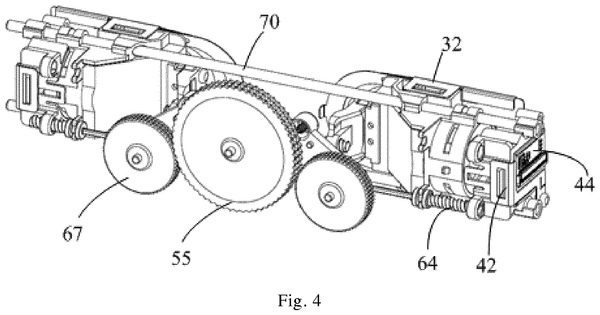

Accordingly, by rotating the second straight gear 67, the second stud 62 may be rotated, so that the distance between the image generation device 40 and the optical unit 30 corresponding to the image generation device 40, i.e. a diopter, may be adjusted, as illustrated in Fig. 2 and Fig. 4. When it is needed to adjust the pupillary distance instead of the diopter, the image generation device 40 may move along with the optical unit 30. As the second stud 62 is configured to move axially in the through hole 68, the second stud 62 may also move along with the image generation device 40. Accordingly, the second straight gear 67 may have a fixed position, just like the first straight gear 55. Certainly, in other embodiments, the second stud 62 may not be configured to move in the through hole 68, in which case a space is required to be reserved for the second crown gear 66 and the second straight gear 67 to move therein.

It should be understood that, the second rotary assembly 63 is not limited to the structure illustrated in the drawings. For example, the second rotary assembly 63 may also be a paddle (not illustrated in the drawings) fixed to the second stud 62 and extending outwards along a direction perpendicular to the second stud 62, and the above function may be implemented by shifting the paddle. Or, the second rotary assembly 63 may only include the second crown gear 66. In addition, the D-shaped section of the second segment 65 of the second stud 62 is intended to allow the second crown gear 66 to drive the second stud 62 to rotate, and thus, it may be understood that the section may have a non-circular shape, but not limited to a D shape, as long as the above function can be realized.

The display component 20 according to the invention further includes two guiding rails 70 (one guiding rail in Fig. 2 is illustrated with dashed lines) disposed at two opposite sides of the optical unit 30 respectively. Two accommodating holes 72 are provided at two opposite sides of the lens barrel 32 of the optical unit 30 respectively, and two accommodating holes 72 are also provided at two opposite sides of the base 42 of the image generation device 40 respectively. In the present embodiment, the guiding rail 70 is column-shaped and movably passes through the accommodating holes 72 of the lens barrel 32 and the accommodating holes 72 of the base 42. Accordingly, the two optical units 30 may move along the guiding rails 70 under the adjustment of the first adjustment mechanism 50, and the two image generation devices 40 may move along the guiding rails 70 under the adjustments of the second adjustment mechanisms 60.

In the present embodiment, the lens barrel 32 and the base 42 are fitted over to the same guiding rails 70. In an exemplary device, the lens barrel 32 and the base 42 both may have their respective guiding rails. In addition, the guiding rail is not limited to the structure illustrated in the drawings. For example, the guiding rail may be a groove (not illustrated in the drawings) formed in the housing 12, and the lens barrel 32 and the base 42 may be accommodated in the groove and configured to move in the groove along a direction defined by the groove. In summary, it is only needed that the guiding rail can play a guiding function.

The above descriptions are only preferable embodiments of the present disclosure and are not intended to limit the present disclosure.

## Claims

1. A display component (20) for head mounted displays, comprising:
two optical units (30);
a first adjustment mechanism (50) connected to the two optical units (30) and configured to adjust a distance between the two optical units (30);
two image generation devices (40), each of the two image generation devices (40) movably connecting to one of the two optical units (30) corresponding to the image generation device (40), and an image generated by each of the two image generation devices (40) being projected by the corresponding optical unit (30) in a predetermined direction; and
two second adjustment mechanisms (60), each of the two second adjustment mechanisms (60) connecting to one of the two image generation devices (40) corresponding to the second adjustment mechanism (60) and configured to adjust a distance between the corresponding image generation device (40) and the optical unit (30) corresponding to the image generation device (40),
**characterized in that** the two optical units (30) and the two image generation devices (40) connect to a guiding rail (70), the two optical units (30) are configured to move along the guiding rail (70) under an adjustment of the first adjustment mechanism (50) so as to adjust the distance between the two optical units (30), and each of the two image generation devices (40) is configured to move along the same guiding rail (70) under an adjustment of the second adjustment mechanism (60) corresponding to the image generation device (40) so as to adjust the distance between the image generation device (40) and the optical unit (30) corresponding to the image generation device (40).

2. The display component (20) according to claim 1, wherein two guiding rails (70) are provided and respectively disposed at two opposite sides of each of the two optical units (30).

3. The display component (20) according to claim 2, wherein the two guiding rails (70) are column-shaped, and each of the two optical units (30) and each of the two image generation devices (40) are movably fitted over the two guiding rails (70).

4. The display component (20) according to any one of claims 1 to 3, wherein each of the two first adjustment mechanisms (50) comprises:
two first threaded holes (51) formed in the two optical units (30) respectively;
a first stud (52) screwed to the two first threaded holes (51), wherein the first stud (52) is screwed with the two first threaded holes (51) via threads in opposite directions; and
a first rotary assembly (53) connected to the first stud (52) and configured to drive the first stud (52) to rotate so as to adjust the distance between the two optical units (30).

5. The display component (20) according to claim 4, wherein the first rotary assembly (53) comprises a first crown gear (54) configured to rotate coaxially and synchronously with the first stud (52).

6. The display component (20) according to claim 5, wherein the first rotary assembly (53) further comprises a first straight gear (55) coupled to the first crown gear (54).

7. The display component (20) according to any one of claims 1 to 3, wherein each of the two second adjustment mechanisms (60) comprises:
a second threaded hole (61) formed in the image generation device (40);
a second stud (62) screwed to the second threaded hole (61); and
a second rotary assembly (63) connected to the second stud (62) and configured to drive the second stud (62) to rotate so as to adjust the distance between the image generation device (40) and the optical unit (30) corresponding to the image generation device (40).

8. The display component (20) according to claim 7, wherein the second stud (62) defines an axis and comprises a first segment (64) provided with threads and coupled to the second threaded hole (61), and a second segment (65) opposite to the first segment (64), a section of the second segment (65) along a direction perpendicular to the axis is non-circular-shaped, the second rotary assembly (63) defines a through hole (68) matched with the section of the second segment (65) in shape, and the second segment (65) passes through the through hole (68) and is configured to move in the through hole (68) along a direction of the axis.

9. The display component (20) according to claim 8, wherein the second rotary assembly (63) comprises a second crown gear (66) provided with the through hole (68).

10. The display component (20) according to claim 9, wherein the second rotary assembly (63) further comprises a second straight gear (67) coupled to the second crown gear (66).

11. A head mounted display (8), comprising a housing (12) and a display component (20) according to any one of claims 1 to 10 accommodated in the housing (12), wherein at least one part of the first adjustment mechanism (50) and at least one part of the second adjustment mechanisms (60) are exposed out of the housing (12).

## Patentansprüche

1. Anzeigekomponente (20) für Kopf montierte Displays, umfassend:
zwei optische Einheiten (30);
ein erstes Einstellmittel (50), der mit den zwei optischen Einheiten (30) verbunden ist und konfiguriert ist, um einen Abstand zwischen den zwei optischen Einheiten (30) einzustellen;
zwei Bilderzeugungsvorrichtungen (40), wobei jede der zwei Bilderzeugungsvorrichtungen (40) beweglich mit einer der zwei optischen Einheiten (30) verbunden ist, die der Bilderzeugungsvorrichtung (40) entsprechen, und ein von jeder der zwei Bilderzeugungsvorrichtungen (40) erzeugtes Bild von der entsprechenden optischen Einheit (30) in einer vorbestimmten Richtung projiziert wird; und
zwei zweite Einstellmittel (60), wobei jeder der zwei zweiten Einstellmittel (60) mit einer der zwei Bilderzeugungsvorrichtungen (40) verbunden ist, die dem zweiten Einstellmittel (60) entsprechen und konfiguriert sind, um einen Abstand zwischen der entsprechenden Bilderzeugungsvorrichtung (40) und der optischen Einheit (30), die der Bilderzeugungsvorrichtung (40) entspricht, einzustellen,
**dadurch gekennzeichnet, dass** die zwei optischen Einheiten (30) und die zwei Bilderzeugungsvorrichtungen (40) mit einer Führungsschiene (70) verbunden sind, wobei die zwei optischen Einheiten (30) konfiguriert sind, sich unter einer Einstellung des ersten Einstellmittels (50) entlang der Führungsschiene (70) zu bewegen, um den Abstand zwischen den zwei optischen Einheiten (30) einzustellen, und jede der zwei Bilderzeugungsvorrichtungen (40) konfiguriert ist, sich unter einer Einstellung des zweiten Einstellmittels (60), welcher der Bilderzeugungsvorrichtung (40) entspricht, entlang der gleichen Führungsschiene (70) zu bewegen, um den Abstand zwischen der Bilderzeugungsvorrichtung (40) und der optischen Einheit (30) einzustellen, welcher der Bilderzeugungsvorrichtung (40) entspricht.

2. Anzeigekomponente (20) nach Anspruch 1, wobei zwei Führungsschienen (70) bereit gestellt sind und jeweils an zwei gegenüberliegenden Seiten jeder der beiden optischen Einheiten (30) angeordnet sind.

3. Anzeigekomponente (20) nach Anspruch 2, wobei die zwei Führungsschienen (70) säulenförmig sind und jede der zwei optischen Einheiten (30) und jede der zwei Bilderzeugungsvorrichtungen (40) beweglich über den zwei Führungsschienen (70) angebracht sind.

4. Anzeigekomponente (20) nach einem der Ansprüche 1 bis 3, wobei jedes der beiden ersten Einstellmittel (50) Folgendes umfasst:
zwei erste Gewindelöcher (51), die jeweils in den beiden optischen Einheiten (30) ausgebildet sind;
einen ersten Bolzen (52), der mit den beiden ersten Gewindelöchern (51) verschraubt ist, wobei der erste Bolzen (52) mit den beiden ersten Gewindelöchern (51) über Gewinde in entgegengesetzte Richtungen verschraubt ist; und
eine erste Drehanordnung (53), die mit dem ersten Bolzen (52) verbunden ist und konfiguriert ist, um den ersten Bolzen (52) zum Drehen anzutreiben, um den Abstand zwischen den beiden optischen Einheiten (30) einzustellen.

5. Anzeigekomponente (20) nach Anspruch 4, wobei die erste Drehanordnung (53) ein erstes Tellerrad (54) umfasst, das so konfiguriert ist, dass es sich koaxial und synchron mit dem ersten Bolzen (52) dreht.

6. Anzeigekomponente (20) nach Anspruch 5, wobei die erste Drehanordnung (53) ferner ein erstes gerades Zahnrad (55) umfasst, das mit dem ersten Tellerrad (54) gekoppelt ist.

7. Anzeigekomponente (20) nach einem der Ansprüche 1 bis 3, wobei jedes der beiden zweiten Einstellmittel (60) Folgendes umfasst:
ein zweites Gewindeloch (61), das in der Bilderzeugungsvorrichtung (40) ausgebildet ist;
einen zweiten Bolzen (62), der mit dem zweiten Gewindeloch (61) verschraubt ist; und
eine zweite Drehanordnung (63), die mit dem zweiten Bolzen (62) verbunden ist und konfiguriert ist, den zweiten Bolzen (62) zum Drehen anzutreiben, um den Abstand zwischen der Bilderzeugungsvorrichtung (40) und der optischen Einheit (30) entsprechend der Bilderzeugungsvorrichtung (40) einzustellen.

8. Anzeigekomponente (20) nach Anspruch 7, wobei der zweite Bolzen (62) eine Achse definiert und ein erstes Segment (64), das mit Gewinden versehen und mit dem zweiten Gewindeloch (61) gekoppelt ist, und ein zweites Segment (65), das dem ersten Segment (64) gegenüberliegt, wobei ein Abschnitt des zweiten Segments (65) entlang einer Richtung senkrecht zur Achse nicht kreisförmig ausgebildet ist, die zweite Drehanordnung (63) definiert ein Durchgangsloch (68), das mit dem Querschnitt des zweiten Segments (65) in Form übereinstimmt, und das zweite Segment (65) verläuft durch das Durchgangsloch (68) und ist so konfiguriert, dass es sich in dem Durchgangsloch (68) entlang einer Richtung der Achse bewegt.

9. Anzeigekomponente (20) nach Anspruch 8, wobei die zweite Drehanordnung (63) ein zweites Tellerrad (66) umfasst, das mit dem Durchgangsloch (68) versehen ist.

10. Anzeigekomponente (20) nach Anspruch 9, wobei die zweite Drehanordnung (63) ferner ein zweites gerades Zahnrad (67) umfasst, das mit dem zweiten Tellerrad (66) gekoppelt ist.

11. Kopf montiertes Display (8), umfassend ein Gehäuse (12) und eine Anzeigekomponente (20) nach einem der Ansprüche 1 bis 10, die in dem Gehäuse (12) untergebracht sind, wobei mindestens ein Teil des ersten Einstellmittels (50) und mindestens ein Teil des zweiten Einstellmittels (60) vom Gehäuse (12) freigelegt sind.

## Revendications

1. Composant d'affichage (20) destiné à des visiocasques, comprenant :
deux unités optiques (30) ;
un premier mécanisme de réglage (50) relié aux deux unités optiques (30) et conçu pour régler une distance entre les deux unités optiques (30) ;
deux dispositifs de génération d'images (40), chacun des deux dispositifs de génération d'images (40) se reliant de manière mobile à l'une des deux unités optiques (30) correspondant au dispositif de génération d'images (40) et une image générée par chacun des deux dispositifs de génération d'images (40) étant projetée par l'unité optique correspondant (30) dans une direction prédéfinie ; et
les deux seconds mécanismes de réglage (60), chacun des deux seconds mécanismes de réglage (60) se reliant à l'un des deux dispositifs de génération d'images (40) correspondant au second mécanisme de réglage (60) et conçus pour régler une distance entre le dispositif de génération d'images correspondant (40) et l'unité optique (30) correspondante au dispositif de génération d'images (40),
**caractérisé en ce que** les deux unités optiques (30) et les deux dispositifs de génération d'images (40) se relient à un rail de guidage (70), les deux unités optiques (30) sont conçues pour se déplacer dans le rail de guidage (70) dans le cadre d'un réglage du premier mécanisme de réglage (50) de manière à régler la distance entre les deux unités optiques (30) et chacun des deux dispositifs de génération d'images (40) est conçu pour se déplacer le long du même rail de guidage (70) dans le cadre d'un réglage du second mécanisme de réglage (60) correspondant au dispositif de génération d'images (40) de manière à régler la distance entre le dispositif de génération d'images (40) et l'unité optique (30) correspondante au dispositif de génération d'images (40).

2. Composant d'affichage (20) selon la revendication 1, dans lequel deux rails de guidage (70) sont prévus et respectivement disposés au niveau de deux côtés opposés de chacune des deux unités optiques (30).

3. Composant d'affichage (20) selon la revendication 2, dans lequel les deux rails de guidage (70) sont en forme de colonne et chacune des deux unités optiques (30) et chacun des deux dispositifs de génération d'images (40) sont montés de manière mobile sur les deux rails de guidage (70).

4. Composant d'affichage (20) selon l'une quelconque des revendications 1 à 3, dans lequel chacun des deux premiers mécanismes de réglage (50) comprend :
deux premiers trous filetés (51) formés dans les deux unités optiques (30) respectivement ;
un première tige (52) vissée dans les deux premiers trous filetés (51), la première tige (52) étant vissée avec les deux premiers trous filetés (51) au moyen des filets dans des directions opposées ; et
un premier ensemble rotatif (53) relié à la première tige (52) et conçu pour entraîner la première tige (52) en rotation de manière à régler la distance entre les deux unités optiques (30).

5. Composant d'affichage (20) selon la revendication 4, dans lequel le premier ensemble rotatif (53) comprend une première couronne dentée (54) conçue pour tourner coaxialement et de manière synchrone avec la première tige (52).

6. Composant d'affichage (20) selon la revendication 5, dans lequel le premier ensemble rotatif (53) comprend en outre un premier engrenage droit (55) accouplé à la première couronne dentée (54).

7. Composant d'affichage (20) selon l'une quelconque des revendications 1 à 3, dans lequel chacun des deux seconds mécanismes de réglage (60) comprend :
un second trou fileté (61) formé dans le dispositif de génération d'images (40) ;
une seconde tige (62) vissée dans le second trou fileté (61) ; et
un premier ensemble rotatif (63) relié à la première tige (62) et conçu pour entraîner la seconde tige (62) en rotation de manière à régler la distance entre le dispositif de génération d'images (40) et l'unité optique (30) correspondante au dispositif de génération d'images (40).

8. Composant d'affichage (20) selon la revendication 7, dans lequel la seconde tige (62) définit un axe et comprend un premier segment (64) pourvu de filetages et accouplé au second trou fileté (61) et un second segment (65) opposé au premier segment (64), une section du second segment (65) le long d'une direction perpendiculaire à l'axe est de forme non circulaire, le second ensemble rotatif (63) définit un trou traversant (68) de forme correspondante avec la section du second segment (65) et le second segment (65) passe à travers le trou traversant (68) et est conçu pour se déplacer dans le trou traversant (68) le long d'une direction de l'axe.

9. Composant d'affichage (20) selon la revendication 8, dans lequel le second ensemble rotatif (63) comprend un seconde couronne dentée (66) pourvue du trou traversant (68).

10. Composant d'affichage (20) selon la revendication 9, dans lequel le second ensemble rotatif (63) comprend en outre un second engrenage droit (67) accouplé à la seconde couronne dentée (66).

11. Visiocasque (8), comprenant un boîtier (12) et un composant d'affichage
(20) selon l'une quelconque des revendications 1 à 10 logé dans le boîtier (12) dans lequel
au moins une partie du premier mécanisme de réglage (50) et au moins une partie des seconds mécanismes de réglage (60) sont apparents hors du boîtier (12).
